# EUROPÄISCHE PATENTANMELDUNG

(11) **EP 1 734 196 A2**
(43) Veröffentlichungstag der Anmeldung: **20.12.2006**
(21) Anmeldenummer: 06012116.7
(22) Anmeldetag: 13.06.2006
(51) Int. Cl.: E04B 1/80

(54) **Durchdringungselement für ein Wandelement**

(30) Priorität: 16.06.2005 DE 102005027979
(71) Anmelder: Variotec Sandwichelemente GmbH & Co. KG, 92318 Neumarkt (DE)
(72) Erfinder: Stölzel, Christof, 92318 Neumarkt/Voggenthal (DE)
(74) Vertreter: Zinnecker, Armin

(57) **Zusammenfassung**

Ein Durchdringungselement für ein Bauelement, das eine oder mehrere Vakuumisolationsplatten (38) und eines oder mehrere Betonfertigteile (1, 2) umfaßt, ist durch einen oder mehrere Dichtungsringe (123) für ein Rohr (124) oder dergleichen gekennzeichnet (Fig. 1).

## Beschreibung

Die Erfindung betrifft ein Durchdringungselement für ein Bauelement und ein Bauteil, das aus einem derartigen Bauelement und einem derartigen Durchdringungselement besteht.

Das Bauelement umfaßt eine oder mehrere Vakuumisolationsplatten und eines oder mehrere Betonfertigteile.

Das Betonfertigteil kann eine Bodenplatte sein.

Das Bauelement kann eine oder mehrere Vakuumisolationsplatten, ein äußeres Betonfertigteil und ein inneres Betonfertigteil, die durch Anker miteinander verbunden sind, umfassen. Die eine oder mehreren Vakuumisolationsplatten, das äußere Betonfertigteil, das innere Betonfertigteil und die Anker können ein Wandelement bilden.

Ein derartiges Wandelement wird in der prioritätsälteren, nicht vorveröffentlichten Europäischen Patentanmeldung Nr. 04 029 733 beschrieben. Es umfaßt eine Vakuumisolationsplatte, die in der genannten Voranmeldung als Verbundwärmedämmplatte bezeichnet wird, und zwei auf beiden Seiten der Vakuumisolationsplatte vorgesehene Betonteile, die unmittelbar an die Vakuumisolationsplatte angrenzen.

Die Vakuumisolationsplatte umfaßt eine oder mehrere Vakuumdämmplatten aus einem evakuierbaren, porösen Material geringer Wärmeleitfähigkeit und eine vakuumdichte Umhüllung, insbesondere eine gasdichte und diffusionsdichte Umhüllung. Besonders geeignet sind Folien aus Kunststoff, Folien aus Metall, insbesondere aus Aluminium, oder Folien aus Kunststoff und Metall, insbesondere eine metallisierte Hochbarrierefolie aus Kunststoff. Die Vakuumdämmplatten bilden den Kern der Vakuumisolationsplatte. Als Material für die Vakuumdämmplatten sind insbesondere mikroporöse Kieselsäurepulver oder offenporige Schäume aus Polyurethan oder Polystyrol geeignet. Bei mikroporösen Kernen genügt aufgrund ihrer extrem kleinen Porengröße von weniger als einem halben Mikrometer ein Vakuum von etwa 1 bis 10 mbar. Bei offenporigen Schäumen ist es dagegen vorteilhaft oder erforderlich, daß die Gasdrücke aufgrund der gröberen Poren im Bereich von 0,1 bis 1 mbar liegen.

Wenn mehrere Vakuumdämmplatten von einer Umhüllung umgeben sind, liegen diese Vakuumdämmplatten vorzugsweise nebeneinander. Vorteilhaft ist es, die in der Europäischen Patentanmeldung 04 029 733 beschriebenen Merkmale vorzusehen. Die eine oder mehreren Vakuumdämmplatten können beidseitig von Kunststoffschaum, vorzugsweise von Polyurethanschaum, umgeben sein. Vorzugsweise ist der Kunststoffschaum bzw. Polyurethanschaum von der vakuumdichten Umhüllung abgedeckt.

Die vakuumdichte Umhüllung ist vorzugsweise von mindestens einer weiteren Platte abgedeckt, die aus Kunststoffschaum, vorzugsweise aus Polyurethanschaum, vorzugsweise aus gepresstem Polyurethanschaum, aber auch aus einem anderen Werkstoff mit niedriger Wärmeleitfähigkeit bestehen kann. Die weitere Platte ist vorzugsweise auf die Umhüllung bzw. auf die Aluminiumfolie aufgeklebt.

Nach einer weiteren vorteilhaften Weiterbildung sind die Außenkanten der Vakuumdämmplatten von einem druckstabilen Konstruktionsschaum umgeben. Der druckstabile Konstruktionsschaum umgibt vorzugsweise den gesamten umlaufenden Rand der Vakuumdämmplatten. Er weist vorzugsweise die gleiche Stärke auf wie die Vakuumdämmplatten. Vorzugsweise besteht der druckstabile Konstruktionsschaum aus Polyurethan. Zur Herstellung dieser vorteilhaften Weiterbildung kann der druckstabile Konstruktionsschaum vor dem beidseitigen Umschäumen mit Kunststoffschaum im Kantenbereich der Vakuumdämmplatten in vorzugsweise gleicher Stärke als Abstandshalter eingelegt werden.

Eine weitere vorteilhafte Weiterbildung ist dadurch gekennzeichnet, daß die Außenkanten der Vakuumdämmplatten bzw. des druckstabilen Konstruktionsschaums von einer Hochbarrierefolie umgeben sind. Die Hochbarrierefolie wirkt vorzugsweise als Diffusionssperrschicht, die eine Permeation von Gas und Wasserdampf in die Vakuumdämmplatten verhindert. Sie ist vorzugsweise gasdicht und diffusionsdicht. Die Hochbarrierefolie ist vorzugsweise aus Kunststoff, vorzugsweise aus Butyl. Sie kann allerdings auch aus einem beschichteten Gewebe bestehen, insbesondere aus einem mit Butyl oder einem anderen geeigneten Kunststoff beschichteten Gewebe. Vorteilhaft ist es, wenn die Hochbarrierefolie U-förmig ausgestaltet ist.

Vorteilhaft ist es, wenn die Hochbarrierefolie an der vakuumdichten Umhüllung anliegt. Die Hochbarrierefolie ist vorzugsweise mit der Umhüllung verklebt. Vorteilhaft ist es, wenn die Hochbarrierefolie U-förmig ist und die Schenkel der Hochbarrierefolie an der Umhüllung anliegen bzw. mit der Umhüllung verklebt sind.

Zur Herstellung dieser vorteilhaften Weiterbildung kann um die Außenkanten der Vakuumdämmplatten bzw. des druckstabilen Konstruktionsschaums eine vorzugsweise U-förmige Hochbarrierefolie herumgelegt werden. Die Schenkel der Hochbarrierefolie können mit der vakuumdichten Umhüllung verklebt werden, so daß der Innenraum gut gegen eindringende Gase und Feuchtigkeit geschützt ist.

Nach einer weiteren vorteilhaften Weiterbildung sind die Außenkanten der Vakuumdämmplatten von einem vorkomprimierten Fugendichtband (Compriband) umgeben, das seinerseits von einer Hochbarrierefolie umgeben ist, insbesondere von einem Butylband.

An oder in einer oder mehreren oder allen Vakuumdämmplatten kann ein Sensor zur Überprüfung des Gasdrucks angebracht sein. Der Sensor kann über elektrische Zuleitungen ausgelesen werden.

Eine oder mehrere oder alle Vakuumdämmplatten können Aussparungen aufweisen, in die Anker eingesetzt werden oder sind. Die Aussparungen können sich in der Mitte und/oder an den Rändern der Vakuumdämmplatten befinden. Zur Herstellung dieser vorteilhaften Weiterbildung können an Stellen, an denen Aussparungen in den Vakuumdämmplatten vorhanden sind, durch die Vakuumisolationsplatte hindurch Löcher gefräst und dort Anker eingesetzt werden. Die Anker sind vorzugsweise aus einem Material mit niedriger Wärmeleitung und/oder hoher mechanischen Festigkeit hergestellt, vorzugsweise aus Kohlefaser, Glasfaser oder vergleichbaren Werkstoffen wie beispielsweise Wood Composites Plastic. Besonders geeignet sind GFK-Werkstoffe und kohlefaserverstärkter Kunststoff.

Zur Herstellung des Wandelements kann die Vakuumisolationsplatte auf eine Betonplatte, insbesondere auf eine frisch gegossene Betonplatte, gesetzt werden. Die andere Seite der Vakuumisolationsplatte kann ebenfalls mit Beton ausgefüllt werden, vorzugsweise in einer Betonschalung. Die Anker können dabei eine innige Verbindung mit der Betonplatte und/oder dem Beton und/oder der Betonschalung eingehen. Wenn die Vakuumisolationsplatte mit ihrer unteren Seite auf die vorzugsweise frisch gegossene Betonplatte gesetzt wird, wird ihre obere Seite in der beschriebenen Weise vorzugsweise in einer Betonschalung mit Beton ausgefüllt.

Eine weitere vorteilhafte Weiterbildung ist dadurch gekennzeichnet, daß die Vakuumisolationsplatte mit einer Innenplatte und mit einer Außenplatte aus Beton verbunden ist. Die Verbindung der Vakuumisolationsplatte mit der Innenplatte und/oder der Außenplatte erfolgt vorzugsweise durch Verkleben. Die Innenplatte und/oder die Außenplatte sind mit der Vakuumisolationsplatte über die aus der Vakuumisolationsplatte herausstehenden Anker verbunden.

Die Erfindung ist mit besonderem Vorteil bei einem Bauelement anwendbar, bei dem ein Betonfertigteil von der Vakuumisolationsplatte beabstandet ist. Der freie Raum zwischen der Vakuumisolationsplatte und diesem Betonfertigteil wird durch einen oder mehrere Anker überbrückt. In diesen Raum kann bei der Herstellung eines Gebäudes Ortbeton eingebracht werden. Hierdurch kann die Wandstärke erhöht werden. Ferner kann die Wand einfach und schnell hergestellt werden.

Es ist möglich, daß beide Betonfertigteile von der Vakuumisolationsplatte beabstandet sind. In den meisten Fällen ist es allerdings vorteilhaft, wenn nur eines der beiden Betonfertigteile von der Vakuumisolationsplatte beabstandet ist.

Vorteilhaft ist es, wenn das innere Betonfertigteil von der Vakuumisolationsplatte beabstandet ist. Dabei ist es vorteilhaft, wenn in diesem Fall das äußere Betonfertigteil nicht von der Vakuumisolationsplatte beabstandet ist.

Aufgabe der Erfindung ist es, ein Durchdringungselement für ein Bauelement vorzuschlagen.

Erfindungsgemäß wird diese Aufgabe durch einen oder mehrere Dichtungsringe für ein Rohr und ein sonstiges Durchführelement gelöst. Vorzugsweise sind zwei Dichtungsringe vorhanden, die vorzugsweise voneinander beabstandet sind.

Vorteilhafte Weiterbildungen sind in den Unteransprüchen beschrieben.

Das Betonfertigteil kann eine Bodenplatte sein.

Das Bauelement kann eine oder mehrere Vakuumisolationsplatten, ein äußeres Betonfertigteil und ein inneres Betonfertigteil, die durch Anker miteinander verbunden sind, umfassen, wobei die Vakuumisolationsplatte oder die Vakuumisolationsplatten, das äußere Betonfertigteil, das innere Betonfertigteil und die Anker vorzugsweise ein Wandelement bilden, insbesondere ein Wandelement der beschriebenen Art.

Vorteilhaft ist es, wenn ein Dichtungsring im Bereich des äußeren Betonfertigteils vorgesehen ist, insbesondere im Bereich des äußeren Betonfertigteils des Wandelements.

Stattdessen oder zusätzlich kann ein Dichtungsring im Bereich des inneren Betonfertigteils vorgesehen sein, insbesondere im Bereich des inneren Betonfertigteils des Wandelements.

Die Erfindung betrifft ferner ein Bauteil, bestehend aus einem Bauelement der eingangs geschilderten Art und einem erfindungsgemäßen Durchdringungselement.

Vorteilhaft ist es, wenn das Bauelement ein Isolationselement zwischen der Vakuumisolationsplatte und dem Durchdringungselement aufweist. Das Isolationselement ist vorzugsweise aus Kunststoff hergestellt. Besonders geeignet ist Schaumstoff, vorzugsweise PUR-Schaum.

Ausführungsbeispiele der Erfindung werden nachstehend anhand der beigefügten Zeichnung im einzelnen erläutert. In der Zeichnung zeigt
- Fig. 1: ein Wandelement mit einem Durchdringungselement in einer seitlichen Schnittansicht,
- Fig. 2: eine Bodenplatte mit einem Durchdringungselement in einer seitlichen Schnittansicht,
- Fig. 3: den Randbereich einer Vakuumisolationsplatte in einer seitlichen Schnittansicht und
- Fig. 4: zwei nebeneinanderliegende Vakuumisolationsplatten in einer Teilansicht von vorne.

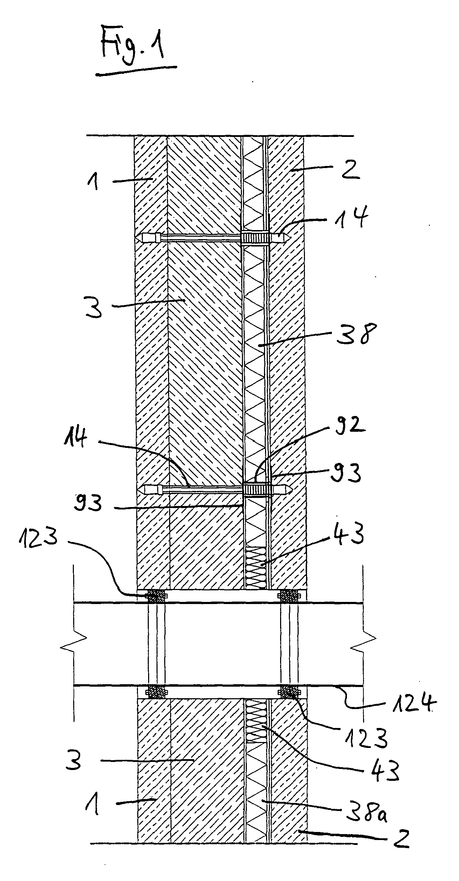

Das in Fig. 1 gezeigte Wandelement 13 umfaßt eine Vakuumisolationsplatte (VIP) 38, ein äußeres Betonfertigteil 2 und ein inneres Betonfertigteil 1, die durch Anker 14, nämlich die GFK-Anker, miteinander verbunden sind. Das innere Betonfertigteil 1 ist von der Vakuumisolationsplatte 38 beabstandet. Bei der Herstellung der Wand wird der Zwischenraum zwischen der Vakuumisolationsplatte 38 und dem inneren Betonfertigteil 1 durch Ortbeton 3 gefüllt.

Die Anker 14 sind vorzugsweise aus einem Material mit einer geringen Wärmeleitfähigkeit und/oder mit einer hohen mechanischen Festigkeit hergestellt. Besonders geeignet sind GFK-Werkstoffe und kohlefaserverstärkter Kunststoff. Die Anker 14 sind von jeweils einer Hülse 92 umgeben. Ferner sind im Bereich der Anker 14 beidseits der Vakuumisolationsplatten 38 Abdeckscheiben 93 vorgesehen, die eine mittige Öffnung zum Durchtritt eines Ankers 14 aufweisen, die sich an die Enden der Hülsen 92 nach außen anschließen und die die an die Hülsen 92 anschließenden Bereiche der Vakuumisolationsplatten 38 abdecken. Die Hülsen 92 und/oder die Abdeckscheiben 93 dienen zur Wärmeisolation der Anker 14. Sie tragen dazu bei, daß die Anker 14 keine Wärmebrücken bilden.

Das Durchdringungselement für das Wandelement 13 umfaßt einen äußeren Dichtungsring 123 und einen inneren Dichtungsring 123 für ein Rohr 124. Die Außenseite des äußeren Dichtungsrings 123 liegt am äußeren Betonfertigteil 2 an. Die Außenseite des inneren Dichtungsrings 123 liegt an dem inneren Betonfertigteil 1 an. Die Innenseiten der Dichtungsringe 123 liegen an den Außenseiten des Rohrs 124 an.

Die Vakuumisolationsplatte 38 endet vor den zugehörigen Enden des inneren Betonfertigteils 1 und des äußeren Betonfertigteils 2. In der auf diese Weise entstehenden Lücke befindet sich ein Isolationselement 43, das aus PUR-Schaum hergestellt ist. Das Isolationslement 43 befindet sich zwischen der Vakuumisolationsplatte 38 und dem Durchdringungselement. Es schließt bündig mit den Enden des inneren Betonfertigteils 1 und des äußeren Betonfertigteils 2 ab. Ferner liegt das lsolationslement 43 am Ende der Vakuumisolationsplatte 38 an.

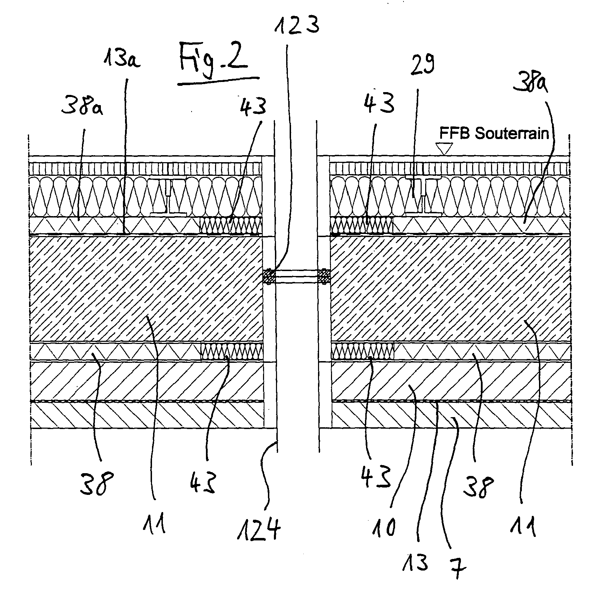

In Fig. 2 befindet sich das Durchdringungselement im Bereich einer Bodenplatte 11, die aus Beton besteht und an deren beiden Seiten jeweils Vakuumisolationsplatten 38, 38a vorgesehen sind, die an der Bodenplatte 11 anliegen. Zwischen der Bodenplatte 11 und der Vakuumisolationsplatte 38a ist eine Abdichtung 13a gegen aufsteigende Feuchtigkeit vorgesehen. Auf der oberen Vakuumisolationsplatte 38a befindet sich ein Doppelboden 29. Unter der unteren Vakuumisolationsplatte 38 befindet sich eine Schicht aus Ausgleichsbeton 10, eine Abdichtung 13 gegen drückendes Wasser und ein Sauberkeitsschicht 7.

Das Durchdringungselement umfaßt einen Dichtungsring 123, der sich etwas oberhalb der Mitte der Bodenplatte 11 befindet und dessen Außenseite an der Bodenplatte 11 anliegt. Die Innenseite des Dichtungsrings 123 liegt an der Außenseite des Rohres 124 an.

Auch hier enden die Vakuumisolationsplatten 38, 38a vor dem Ende der Bodenplatte 11. In der dadurch entstehenden Lücke befindet sich jeweils ein Isolationselement 43 aus PUR-Schaum, das am Ende der zugehörigen Vakuumisolationsplatte 38, 38a anliegt und das jeweils bündig mit der Bodenplatte 11 abschließt.

Bei den Compribändern 24, 24a handelt es sich vorzugsweise um vorkomprimierte Fugendichtbänder aus offenzelligem Kunststoffschaum, insbesondere Polyurethan-Weichschaum, mit Polymerimprägnat oder mit einem lmprägnat auf Acrylatbasis.

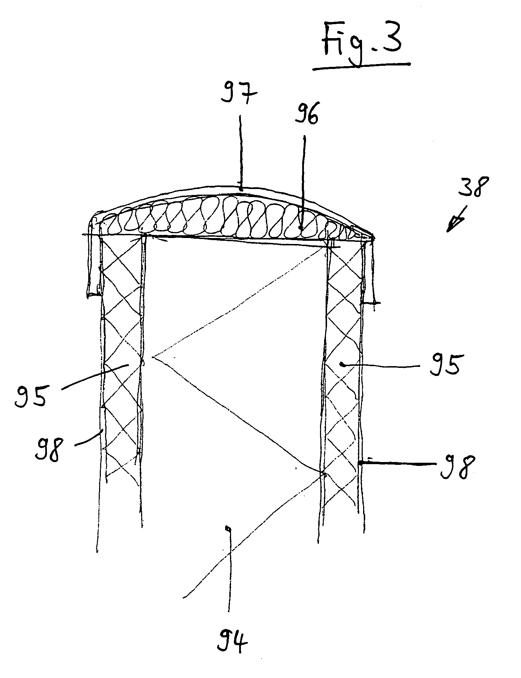

Fig. 3 zeigt den Randbereich einer Vakuumisolationsplatte 38, die eine Vakuumdämmplatte 94 umfaßt, die auf beiden Seiten von jeweils einer Platte 95 aus Polyurethanschaum oder aus massivem Polyurethan umgeben ist. Die Außenseiten der Platten 95 sind von einer diffusionsdichten und gasdichten Umhüllung 98 abgedeckt. Die Außenkanten der Vakuumdämmplatte 94 sind von einem Compriband 96 umgeben, das seinerseits von einem Butylband 97 umgeben ist. Das Butylband 97 übergreift das Compriband 96 und die äußeren Enden der Platten 95 einschließlich der Umhüllungen 98, mit denen es verbunden, insbesondere verklebt, ist. Das Compriband 96 ist gewölbt. Seine Stärke nimmt von der Mitte nach außen hin ab. Wenn benachbarte Vakuumisolationsplatten 38, 38' aneinandergelegt werden, werden die zugehörigen Compribänder 96 zusammengedrückt, wodurch ein Fugendichtschluß nebeneinanderliegender Vakuumisolationsplatten 38, 38' gewährleistet werden kann.

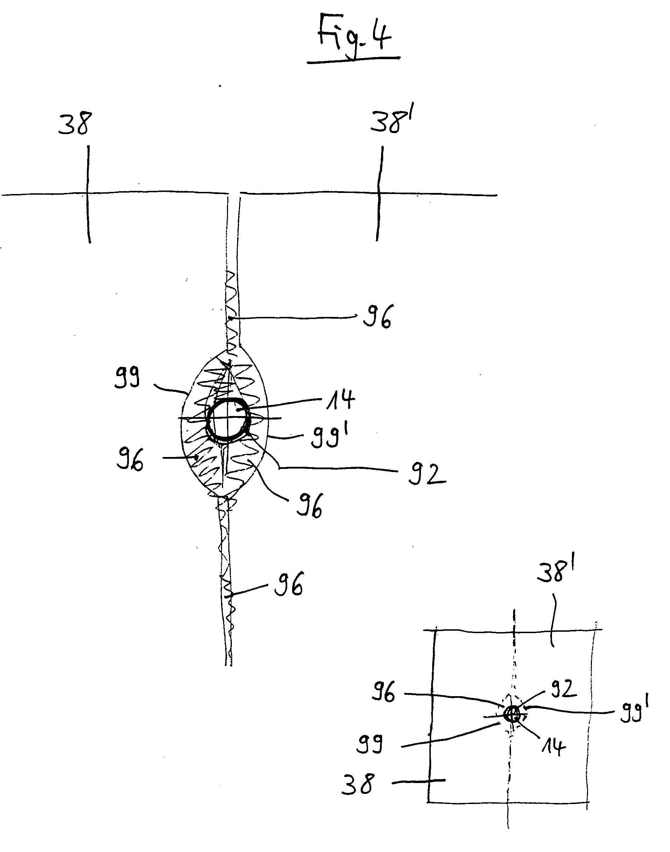

In Fig. 4 sind Teilbereiche von zwei nebeneinanderliegenden Vakuumisolationsplatten 38, 38' dargestellt. Im Bereich der Ankerdurchführung, also im Bereich einer Hülse 92 für einen Anker 14, weisen die Vakuumisolationsplatten 38, 38' jeweils Aussparungen 99, 99' auf, die einander gegenüberliegen. Der Bereich zwischen den Aussparungen 99, 99' und der Hülse 92 wird ebenfalls durch die Compribänder 96 gefüllt.

## Patentansprüche

1. Durchdringungselement für ein Bauelement, das eine oder mehrere Vakuumisolationsplatten (38, 38') und eines oder mehrere Betonfertigteile (11, 1, 2) umfaßt,
**gekennzeichnet durch**
einen oder mehrere Dichtungsringe (123) für ein Rohr (124) oder dergleichen.

2. Durchdringungselement nach Anspruch 1, **dadurch gekennzeichnet, daß** das Betonfertigteil eine Bodenplatte (11) ist.

3. Durchdringungselement nach Anspruch 1, **dadurch gekennzeichnet, daß** das Bauelement eine oder mehrere Vakuumisolationsplatten (38, 38'), ein äußeres Betonfertigteil (2) und ein inneres Betonfertigteil (1), die durch Anker (14) miteinander verbunden sind, umfaßt, wobei ein Dichtungsring (123) im Bereich des äußeren Betonfertigteils (2) und/oder im Bereich des inneren Betonfertigteils (1) vorgesehen ist.

4. Durchdringungselement nach Anspruch 3, **dadurch gekennzeichnet, daß** die Vakuumisolationsplatte oder die Vakuumisolationsplatten (38, 38'), das äußere Betonfertigteil (2), das innere Betonfertigteil (1) und die Anker (14) ein Wandelement (13) bilden.

5. Bauteil, bestehend aus einem Bauelement und einem Durchdringungselement nach einem der Ansprüche 1 bis 4.

6. Bauteil nach Anspruch 5, **dadurch gekennzeichnet, daß** das Bauelement ein Isolationselement (43) zwischen der Vakuumisolationsplatte (38) und dem Durchdringungselement aufweist.
